# EUROPÄISCHE PATENTANMELDUNG

(11) **EP 4 847 281 A1**
(43) Veröffentlichungstag der Anmeldung: **02.12.2026**
(21) Anmeldenummer: 25179157.0
(22) Anmeldetag: 27.05.2025
(51) Int. Cl.: B60H 1/00, B60H 1/32, F25D 11/00, F25D 21/14

(54) **KOFFERAUFBAU FÜR EIN FAHRZEUG SOWIE EIN FAHRZEUG ZUR AUSLIEFERUNG VON LEBENSMITTELN IN EINEM SOLCHEN KOFFERAUFBAU**

(71) Anmelder: Dörsam Fahrzeug- und Klimatechnik GmbH, 69509 Mörlenbach (DE)
(72) Erfinder: Dörsam, Horst, 69509 Mörlenbach (DE)
(74) Vertreter: Reiser & Partner Patentanwälte mbB

(57) **Zusammenfassung**

Kofferaufbau (1) für ein Fahrzeug, umfassend einen durch einen Boden (2), eine Decke (3) und vier Wände (4) gebildeten Kasten (5) und ein Klimatisierungssystem mit Verdampfer (6) und Ausströmermaske (7), wobei der Kasten (5) einen Innenraum (8) zur Aufnahme von Behältern begrenzt, wobei das Klimatisierungssystem dazu eingerichtet ist, die Luft in dem Innenraum (8) des Kastens (5) zu temperieren, wobei die Ausströmermaske (7) einen Aufnahmeraum (14) begrenzt und der Verdampfer (6) in dem Aufnahmeraum (14) angeordnet ist, wobei die Ausströmermaske (7) eingerichtet ist, Kondensationsflüssigkeit aufzunehmen.

## Beschreibung

Die Erfindung betrifft einen Kofferaufbau für ein Fahrzeug, umfassend einen durch einen Boden, eine Decke und vier Wände gebildeten Kasten und ein Klimatisierungssystem mit Verdampfer und Ausströmermaske, wobei der Kasten einen Innenraum zur Aufnahme von Behältern begrenzt, wobei das Klimatisierungssystem dazu eingerichtet ist, die Luft in dem Innenraum des Kastens zu temperieren, wobei die Ausströmermaske einen Aufnahmeraum begrenzt und der Verdampfer in dem Aufnahmeraum angeordnet ist.

Solche Kofferaufbauten werden insbesondere für Lieferfahrzeuge verwendet, mit denen Waren transportiert werden. Ein wichtiger Faktor ist dabei, das Gewicht des Kofferaufbaus zu minimieren, um möglichst viel Nutzlast für die zu transportierenden Waren zur Verfügung stellen zu können. Im Inneren des Kofferaufbaus werden mehrere, im Wesentlichen gleiche Behälter verwendet, um die zu transportierenden Waren systematisch zu lagern und Be- und Entladevorgänge zu vereinfachen und zu beschleunigen. Die Behälter sind üblicherweise in etwa quaderförmig ausgebildet und etwa 600 mm lang, 400 mm breit und 200 bis 500 mm hoch. Derartige Lieferfahrzeuge werden häufig in innerstädtischen Bereichen eingesetzt, um Lebensmittel oder dergleichen an dort ansässige Gewerbebetriebe oder auch an Endkunden auszuliefern.

Bei der Auslieferung von Waren an Gewerbebetriebe sowie an Endverbraucher werden oftmals Produkte ausgeliefert, die eine bestimmte Lagerungstemperatur benötigen. Daher werden die Kofferaufbauten insbesondere für Kühlfahrzeuge verwendet, um auch verderbliche oder temperaturempfindliche Waren transportieren zu können. Bei der Klimatisierung ist ein zentraler Punkt, dass sich möglichst wenig Kondensationsflüssigkeit im Inneren des Kofferaufbaus bildet. Dies ist umso wichtiger, denn in den zur Lagerung verwendeten Behältern werden zumeist noch Papiertüten verwendet, die durch Kondensationsflüssigkeit befeuchtet werden und dann eine hohe Rissneigung aufweisen. Kondensationsflüssigkeit ist insbesondere in einer Umgebung mit warmen Außentemperaturen und hoher Luftfeuchtigkeit relevant, also beispielsweise im Sommer oder bei Gewitter. Dadurch ergeben sich besondere Herausforderungen an den Kofferaufbau mit dem Klimatisierungssystem.

Der Erfindung liegt die Aufgabe zugrunde, einen Kofferaufbau für ein Fahrzeug bereitzustellen, der eine verbesserte Handhabbarkeit aufweist.

Die Aufgabe wird mit den Merkmalen von Anspruch 1 gelöst. Auf vorteilhafte Ausgestaltungen nehmen die Unteransprüche Bezug.

Der erfindungsgemäße Kofferaufbau für ein Fahrzeug umfasst einen durch einen Boden, eine Decke und vier Wände gebildeten Kasten und ein Klimatisierungssystem mit Verdampfer und Ausströmermaske, wobei der Kasten einen Innenraum zur Aufnahme von Behältern begrenzt, wobei das Klimatisierungssystem dazu eingerichtet ist, die Luft in dem Innenraum des Kastens zu temperieren, wobei die Ausströmermaske einen Aufnahmeraum begrenzt und der Verdampfer in dem Aufnahmeraum angeordnet ist, wobei die Ausströmermaske eingerichtet ist, Kondensationsflüssigkeit aufzunehmen.

Der Verdampfer weist eine Einströmseite für die umzuwälzende Luft und eine Ausströmseite für die temperierte Luft auf. Der Verdampfer umfasst eine integrierte Einrichtung, um anfallende Kondensationsflüssigkeit aufzufangen und abzuleiten. Kondensationsflüssigkeit, die nicht von dieser Einrichtung aufgefangen wird, gelangt in die Ausströmermaske. Die Ausströmermaske ist ein Kondensatsammler und kann korbförmig ausgebildet sein. Bevorzugt deckt die Ausströmermaske eine Unterseite des Verdampfers ab. In die Seitenwände der Ausströmermaske können Durchlassöffnungen eingebracht sein. Dadurch wird eine Luftzirkulation zwischen dem Aufnahmeraum und dem Innenraum des Kastens verbessert.

Das Klimatisierungssystem umfasst vorzugsweise ferner einen Verdichter und einen Kondensator, wobei der Kondensator vorzugsweise an der Unterseite des Fahrzeugs angebracht ist. Dem Kondensator sind vorzugsweise zwei Lüfter zugeordnet. Die Lüfter können eingerichtet sein, bei Stillstand des Verdichters, bspw. nach Ausschalten im Regelbetrieb oder Ausschalten des Fahrzeugmotors, eine vorgewählte Zeit nachzulaufen. Dadurch kann der Systemdruck im Kondensator schneller abgebaut werden, was insbesondere beim einem Wiederanlauf vorteilhaft für den Verdichter ist. Dabei kann ein Unterspannungsschutz vorgesehen sein, so dass der Nachlauf beendet werden kann, wenn die Fahrzeugbatterie eine vorgegebene elektrische Spannung unterschreitet. Ferner ist denkbar, die Lüfter so zu schalten, dass beide Lüfter nur bei einer hohen Leistungsanforderung des Klimatisierungssystems laufen, während bei niedrigeren Leistungsanforderungen nur ein Lüfter in Betrieb ist.

Der Kasten ist vorzugsweise quaderförmig ausgebildet und umfasst eine Stirnwand, zwei an der Stirnwand angeordnete Seitenwände und eine der Stirnwand gegenüberliegende Rückwand. Die Länge des Kastens liegt vorzugweise in einem Bereich zwischen 3.000 mm und 4.000 mm. Die Breite des Kastens liegt vorzugweise in einem Bereich zwischen 1.500 mm und 2.500 mm. Die Höhe des Kastens liegt vorzugweise in einem Bereich zwischen 1.500 mm und 2.500 mm. Besonders bevorzugt beträgt die Länge des Kastens 3.400 mm. Besonders bevorzugt beträgt die Breite des Kastens 2.000 mm. Besonders bevorzugt beträgt die Höhe des Kastens 1.900 mm. Die zuvor genannten Maße beziehen sich auf die Innenmaße des Kastens. Der Kasten ist mit dem Chassis des Fahrzeugs verbunden. Der Innenraum weist bevorzugt ein Volumen in einem Bereich von 7 m³ bis 25 m³ auf. Besonders bevorzugt weist der Innenraum ein Volumen von etwa 13,5 m³ auf. Der Verdampfer ist vorzugsweise in dem Kasten an der Decke angeordnet.

Temperieren im Sinne der Erfindung bedeutet, dass das Klimatisierungssystem dazu eingerichtet ist, die Luft in dem Innenraum des Kastens je nach Anwendungsfall zu kühlen oder zu erwärmen. Ein Kühlen des Innenraums kann insbesondere dann vorteilhaft sein, wenn die Außentemperatur oberhalb der gewünschten Temperatur des Innenraums liegt. Ein Erwärmen des Innenraums kann insbesondere dann vorteilhaft sein, wenn die Außentemperatur unterhalb der gewünschten Temperatur des Innenraums liegt. Neben der Regulierung der Temperatur ist es darüber hinaus auch denkbar, dass das Klimatisierungssystem die Raumluftfeuchtigkeit des Innenraums reguliert. Dadurch ist der Innenraum zum Lagern und Transportieren von Waren und Gegenständen geeignet, die in einem vorgegebenen Temperaturspektrum und bei einer vorgegebenen Raumluftfeuchte gelagert werden müssen. Der Innenraum stellt dabei durch Kühlen oder Erwärmen sowie Be- oder Entfeuchten die für die zu transportierenden Gegenstände vorgegebenen klimatischen Bedingungen her.

In einer vorteilhaften Ausgestaltung der Erfindung ist vorgesehen, dass die Ausströmermaske ausgestaltet ist, die in der Ausströmermaske aufgenommene Kondensationsflüssigkeit wegzuführen. Dadurch kann verhindert werden, dass die in der Ausströmermaske aufgenommene Kondensationsflüssigkeit wieder in die Luft oder auf sonstigem Wege außerhalb der Ausströmermaske in den Innenraum des Kastens gelangt. Somit kann verhindert werden, dass einmal in der Ausströmermaske aufgenommene Kondensationsflüssigkeit zur im Innenraum des Kastens gelagerten Ware oder den für die Ware verwendeten Papiertüten gelangt und diese beschädigt.

In die Wand des Kastens kann eine Öffnung eingebracht sein, wobei die Öffnung in fluidischer Verbindung mit einem Abflusskanal steht, wobei die Öffnung derart in der Wand des Kastens angeordnet ist, dass die in der Ausströmermaske aufgenommene Kondensationsflüssigkeit durch die Öffnung in den Abflusskanal abfließen kann. Der Abflusskanal kann in einem Auffangbehälter oder außerhalb des Kastens enden. Bevorzugt endete der Abflusskanal im Bereich des Bodens des Kastens. Dadurch wird sichergestellt, dass in der Ausströmermaske aufgenommene Kondensationsflüssigkeit, die von der Ausströmermaske weggeführt wurde, nicht wieder zur Ausströmermaske oder in den Innenraum zurück gelangt. Durch diese Ausgestaltung der Ausströmermaske kann ein aufwändiges Schlauch- und/oder Rohrsystem vermieden werden, welches die in der Ausströmermaske aufgenommene Kondensationsflüssigkeit aus der Ausströmermaske abführt. Bei der erfindungsgemäßen Ausgestaltung erfolgt das Ableiten des Kondensats direkt von der Ausströmermaske in den Abflusskanal. Dadurch werden weniger Bauteile benötigt und die Handhabbarkeit des Kofferaufbau wird weiter verbessert. Des Weiteren vereinfacht sich die Montage, weil es nicht erforderlich ist, nach dem Anbringen der Ausströmermaske noch ein Schlauch- oder Rohrsystem anzuschließen. Vorzugsweise steht die Ausströmermaske mittels der Öffnung unmittelbar mit dem Abflusskanal in fluidischer Verbindung. Dabei ist die Ausströmermaske bevorzugt frei von Schläuchen und/oder Rohren zur Ableitung von in der Ausströmermaske aufgenommenen Kondensationsflüssigkeit in den Abflusskanal.

Die Ausströmermaske kann einen Boden und drei Seitenwände umfassen, wobei die Ausströmermaske so an der Decke und an einer Wand des Kastens angeordnet ist, dass der Boden und die drei Seitenwände der Ausströmermaske zusammen mit der Wand und der Decke des Kastens den Aufnahmeraum für den Verdampfer bilden. Der Boden der Ausströmermaske ist vorzugsweise an einer Unterseite des Verdampfers angeordnet. Besonders bevorzugt umgeben der Boden und die Seitenwände der Ausströmermaske den Verdampfer. Ist der Verdampfer an der Decke des Kastens angeordnet, dann sind vorzugsweise die Seitenwände der Ausströmermaske ebenfalls an der Decke des Kastens angeordnet. Vorzugsweise ist die Ausströmermaske an der Stirnwand des Kastens angeordnet.

Der Boden der Ausströmermaske kann in einem Winkel kleiner als 90° an die Wand des Kastens angrenzen. Dabei ist der Boden der Ausströmermaske gegenüber der Wand des Kastens geneigt, und zwar so, dass der Boden der Ausströmermaske von der Wand des Kastens in Richtung der Decke des Kastens abragt. Der Boden der Ausströmermaske weist somit in Richtung der Wand des Kastens ein Gefälle auf. Vorzugsweise ist dieses Gefälle kleiner als 25°, besonders bevorzugt kleiner als 15°. Durch dieses Gefälle kann Kondensationsflüssigkeit, die sich in dem Aufnahmeraum an dem Boden der Ausströmermaske ansammelt, durch die Schwerkraft entlang des Gefälles in Richtung der Wand des Kastens fließen. Eine zusätzliche Vorrichtung zum Absaugen der Kondensationsflüssigkeit ist somit nicht notwendig.

Der Verdampfer kann eine Einrichtung zur Luftzirkulation aufweisen, die durch den Verdampfer temperierte Luft im Innenraum des Kastens verteilt. Durch die Einrichtung für die Luftzirkulation entsteht in dem Innenraum des Kastens eine Zwangsströmung, welche eine besonders gute Durchmischung und Temperaturverteilung der temperierten Luft bewirkt. Des Weiteren vergrößert sich der Luftaustausch zwischen dem Aufnahmeraum der Ausströmermaske und dem restlichen Innenraum des Kastens. Vorzugsweise kann vorgesehen sein, dass die Einrichtung zur Luftzirkulation als Ventilator ausgebildet ist. Die Einrichtung für die Luftzirkulation umfasst vorzugsweise eine Einströmseite und eine Ausströmseite. Die Ausströmseite der Einrichtung für die Luftzirkulation kann in Richtung der Rückwand des Kastens weisen. Vorzugsweise kann die Ausströmseite der Einrichtung für die Luftzirkulation in Richtung der Rückwand des Kastens und in Richtung der Seitenwände des Kastens weisen. Bevorzugt ist die Einrichtung für die Luftzirkulation ein elektrisch angetriebener Ventilator.

Die Einrichtung für die Luftzirkulation kann mehrstufig, wobei vorzugsweise eine erste Stufe mit niedriger Lüfterleistung, eine zweite Stufe mit mittlerer Lüfterleistung und eine dritte Stufe mit hoher Lüfterleistung vorgesehen ist. Die dritte Stufe wird vorzugsweise automatisch angewählt, wenn der Verdichter läuft, während die zweite Stufe vorzugsweise automatisch angewählt wird, wenn der Verdichter nicht läuft. Eine Reduzierung um eine Stufe kann automatisch angewählt werden, wenn die Raumluftfeuchtigkeit so hoch ist, dass eine Tropfenbildung an dem Verdichter erfolgen kann. Dabei wird von der dritten Stufe in die zweite Stufe und von der zweiten Stufe in die erste Stufe geschaltet. Durch die Reduzierung der Lüfterleistung kann die Gefahr reduziert werden, dass an dem Verdampfer entstehende Tropfen im Luftstrom mitgerissen werden. Hierzu kann beispielsweise ein Feuchtefühler vorgesehen sein, der die Raumluftfeuchtigkeit im Kasten erfasst. Alternativ ist denkbar, dass die erste Stufe durch den Benutzer manuell eingeschaltet wird. In diesem Fall kann auch eine Zeitsteuerung vorgesehen sein, durch die das Herabsetzen der Lüfterstufe nach Ablauf einer vorgewählten Zeit beendet wird.

In eine der Wände kann eine Tür eingebracht ist, die eine geöffnete Position und eine geschlossene Position umfasst, wobei die Einrichtung zur Luftzirkulation einen Türkontaktschalter umfasst, der derart eingerichtet ist, dass bei geöffneter Position der Tür die Leistung der Einrichtung zur Luftzirkulation reduziert ist. Vorzugsweise kann die Leistung der Einrichtung zur Luftzirkulation auf null reduziert werden, indem die Einrichtung zur Luftzirkulation ausgeschaltet wird. Alternativ kann anstatt des Tür Kontaktschalters ein Feuchtigkeitssensor verwendet werden, der derart eingerichtet ist, dass bei Über- oder Unterschreitung eines bestimmten Schwellenwerts die Leistung der Einrichtung zur Luftzirkulation reduziert ist. Die Tür kann einen Ausschnitt der Wand bedecken. In der geschlossenen Position verdeckt die Tür den Ausschnitt der Wand vollständig. In der geöffneten Position kann ein Benutzer von außen nach innen oder umgekehrt durch den Ausschnitt der Wand in den Kofferaufbau hinein- oder aus dem Kofferaufbau heraustreten. Bevorzugt weist der Ausschnitt der Wand eine lichte Weite in einem Bereich von 600 mm bis 1.000 mm auf. Besonders bevorzugt weist der Ausschnitt der Wand eine lichte Weite von mindestens 800 mm auf. Die Tür kann vorzugsweise in die Rückwand eingebracht sein. Bevorzugt erstreckt sich die Tür in der Rückwand vom Boden bis zur Decke. Wird die Luftgeschwindigkeit reduziert, dann sinkt zwar auch die Temperierleistung etwas ab, aber es kann durch die verringerte Strömungsgeschwindigkeit verhindert werden, dass im Luftstrom Wasser mitgerissen wird. Zudem strömt bei geöffneter Tür weniger warme Umgebungsluft in den Innenraum des Kastens.

In einer weiteren vorteilhaften Ausgestaltung kann die Einrichtung zur Luftzirkulation einen Schalter umfassen, der derart eingerichtet ist, dass durch Betätigung des Schalters die Leistung der Einrichtung zur Luftzirkulation reduziert ist. Vorzugsweise kann die Leistung der Einrichtung zur Luftzirkulation auf null reduziert werden, indem die Einrichtung zur Luftzirkulation ausgeschaltet wird. Wird die Luftgeschwindigkeit reduziert, dann sinkt zwar auch die Temperierleistung etwas ab, aber es kann durch die verringerte Strömungsgeschwindigkeit verhindert werden, dass im Luftstrom Wasser mitgerissen wird. Durch erneutes Betätigen des Schalters kann die Reduktion der Leistung der Einrichtung zur Luftzirkulation wieder aufgehoben werden, so dass die Leistung der Einrichtung zur Luftzirkulation der Leistung vor dem ersten Betätigen des Schalters entspricht. Weiterhin kann vorgesehen sein, dass der Schalter eine Zeitschaltung umfasst, wobei nach einmaligem Betätigen des Schalters die Leistung zunächst reduziert und nach einer von dem Benutzer vorgegebenen Zeit die Reduktion der Leistung wieder aufgehoben wird. Diese Ausgestaltung ist insbesondere dann vorteilhaft, wenn zwischen Tür und Innenraum keine Einrichtung zum Reduzieren des Luftaustauschs, bspw. ein Lamellenvorhang oder dergleichen, vorgesehen ist.

Die Einrichtung zur Luftzirkulation kann mit einer weiteren Zeitschaltung versehen sein, welche eingerichtet ist, bei Stillstand des Verdichters, bspw. nach Ausschalten des Fahrzeugmotors, eine vorgewählte Zeit nachzulaufen. Dadurch kann der Temperaturunterschied zwischen Verdampfer und Kofferinnenraum ausgeglichen werden. Dabei kann ein Unterspannungsschutz vorgesehen sein, so dass der Nachlauf beendet werden kann, wenn die Fahrzeugbatterie eine vorgegebene elektrische Spannung unterschreitet.

Das Klimatisierungssystem kann einen Filter umfassen, der auf einer Ausströmseite des Verdampfers angeordnet ist. Der Filter fängt mit dem Luftstrom mitgerissenes Wasser auf, das an dem Filter kondensiert und von dort abgeführt wird. Der Filter ist vorzugsweise aus Vlies hergestellt und als Vliesmatte ausgestaltet. Bevorzugt umfasst der Filter mehrere Vliesmatten, wobei die Vliesmatten hintereinander angeordnet sind. Vorzugweise umfasst der Filter drei Vliesmatten. Dadurch kann die Luftfeuchtigkeit im Innenraum gesenkt werden.

Die Ausströmermaske kann eine Sperrmaske umfassen, welche einen thermischen Kurzschluss der Luftströmung innerhalb des Aufnahmeraums der Ausströmermaske verhindert. Dabei ist die Sperrmaske derart angeordnet, dass ein unmittelbarer Rückfluss der ausströmenden Luft von der Ausströmseite des Verdampfers zur Einströmseite der Einrichtung zur Luftzirkulation innerhalb des Aufnahmeraums der Ausströmermaske verhindert wird. Die Sperrmaske ist vorzugsweise in der Ausströmermaske angeordnet. Bevorzugt erstreckt sich die Sperrmaske zwischen zwei gegenüberliegenden Seitenwänden der Ausströmermaske und teilt den Aufnahmeraum der Ausströmermaske in einen ersten und einen zweiten Bereich. Vorzugsweise grenzt die Sperrmaske an zwei gegenüberliegende Seitenwände der Ausströmermaske und den Boden der Ausströmermaske. Die Sperrmaske ist dabei vorzugsweise so angeordnet, dass die Einströmseite der Einrichtung zur Luftzirkulation in dem ersten Bereich angeordnet ist und die Ausströmseite des Verdampfers in dem zweiten Bereich angeordnet ist. Vorzugsweise umfasst die Sperrmaske einen Ausschnitt, wobei die ausströmende Luft des Verdampfers durch den Ausschnitt strömt.

Der Boden, die Decke und die Wände des Kastens können als Sandwichkonstruktion aufgebaut sein, wobei der Boden, die Decke und die Wände des Kastens jeweils zwei Decklagen und eine zwischen den Decklagen angeordnete Dämmlage umfassen. Vorzugsweise ist die Decklagen aus einem glasfaserverstärkten Kunststoff oder einem metallischen Werkstoff ausgebildet, um die Dämmlage vor äußerlichen Einwirkungen und Beschädigungen zu schützen. Dabei kann auch vorgesehen sein, dass die beiden Decklagen aus unterschiedlichen Materialen ausgebildet sind. Bevorzugt ist die Dämmlage aus Schaumstoff oder einem ähnlichen Dämmmaterial ausgebildet, um sowohl eine Wärmeisolation als auch eine ausreichende Festigkeit des Sandwichverbundes zu gewährleisten. Der Abflusskanal kann zwischen den zwei Decklagen angeordnet sein.

Zwischen der Ausströmermaske und der Wand des Kastens kann eine Dichtung angeordnet sein. Die Dichtung verhindert, dass Kondensationsflüssigkeit von dem Boden der Ausströmermaske entlang der Wand in den Innenraum tropft. Vorzugsweise umfasst die Ausströmermaske an einer der Wand zugewandten Seite eine Vertiefung, in der die Dichtung angeordnet ist.

Das Klimatisierungssystem kann mit einem Ausblastemperaturfühler ausgerüstet sein, der die Temperatur der aus dem Verdampfer ausströmenden Luft misst.

Dadurch kann der Benutzer die Ausblastemperatur mittels einer Steuerung begrenzen. Vorzugsweise ist der Ausblastemperaturfühler dem Verdampfer zugeordnet.

Das Klimatisierungssystem kann mit einem Außentemperaturfühler ausgerüstet sein, der die Umgebungstemperatur außerhalb des Kastens misst. Der Außentemperaturfühler ist bevorzugt an einer Außenseite des Kastens angeordnet. In Abhängigkeit der Außentemperatur kann die Soll-Temperatur im Innenraum des Kastens abweichend zur eigentlich gewünschten Temperatur eingestellt werden. Wenn beispielsweise eine Innenraumtemperatur von 25 °C gewünscht ist, kann bei einer hohen Außentemperatur eine niedrigere Innenraumtemperatur als Soll-Temperatur vorgegeben werden, beispielsweise 23 °C, und bei einer niedrigen Außentemperatur kann eine höhere Innenraumtemperatur als Soll-Temperatur vorgegeben werden, beispielsweise 27 °C. Dadurch kann ein besserer Temperaturausgleich beim Türöffnen erzielt werden, weil die Wärme, die in den Waren, welche im Innenraum des Kastens gelagert sind, gespeichert ist, den Temperaturanstieg bzw. -abfall kompensiert.

Das Klimatisierungssystem kann ein Pflegeprogramm umfassen, wobei das Pflegeprogramm durch Aktivierung eines Schalters startet. Das Klimatisierungssystem kann einen Kältemittelverdichter umfassen, wobei nach Start des Pflegeprogramms der Kältemittelverdichter zwangsweise einschaltet, unabhängig von Eingangsparametern des Klimatisierungssystems, wie beispielsweise eingestellter Solltemperatur und Umgebungstemperatur. Dadurch kann das Kältemittel im Kältemittelkreislauf zirkulieren, so dass eine gute Ölverteilung stattfindet und die Bauteile im Kältemittelkreislauf geschmiert werden. Dies ist insbesondere in Zeiträumen wichtig, in denen die Eingangsparameter des Klimatisierungssystems dazu führen würden, dass der Kältemittelverdichter über einen längeren Zeitraum nicht oder nur selten einschaltet, also beispielsweise in den Wintermonaten bei geringer Umgebungstemperatur, wenn eine ebenso geringe Solltemperatur eingestellt ist. Die Aktivierung des Schalters zum Starten des Pflegeprogramms kann von einem Benutzer manuell erfolgen. Vorzugsweise kann das Pflegeprogramm automatisch gestartet werden. Das automatische Starten kann dabei insbesondere zeitabhängig sein. Bevorzugt ist der Start des Pflegeprogramms von der Temperatur des Innenraums des Kastens abhängig. Erst wenn die Temperatur des Innenraums des Kastens einen bestimmten Schwellenwert überschreitet, führt die Aktivierung des Schalters zum Starten des Pflegeprogramms bzw. wird ein automatischer Start des Pflegeprogramms ausgeführt. Vorzugsweise ist das Pflegeprogramm mit einer Zeitvorwahl ausgerüstet, so dass das Pflegeprogramm nach einer zuvor vom Benutzer gewählten Zeit automatisch endet und der Kältemittelverdichter ausschaltet.

Die der Erfindung zugrunde liegende Aufgabe wird auch durch ein Fahrzeug zur Auslieferung von Lebensmitteln mit einem beschriebenen Kofferaufbau gelöst.

Eine Ausgestaltung des erfindungsgemäßen Kofferaufbaus für ein Fahrzeug wird nachfolgend anhand der Figuren näher erläutert. Diese zeigen, jeweils schematisch:
- Fig. 1: ein Fahrzeug mit einem Kofferaufbau in einer Seitenansicht als Schnittdarstellung;
- Fig. 2: eine erste Detailansicht der Ausströmermaske des Kofferaufbaus aus Fig. 1;
- Fig. 3: eine zweite Detailansicht der Ausströmermaske des Kofferaufbaus aus Fig. 1.

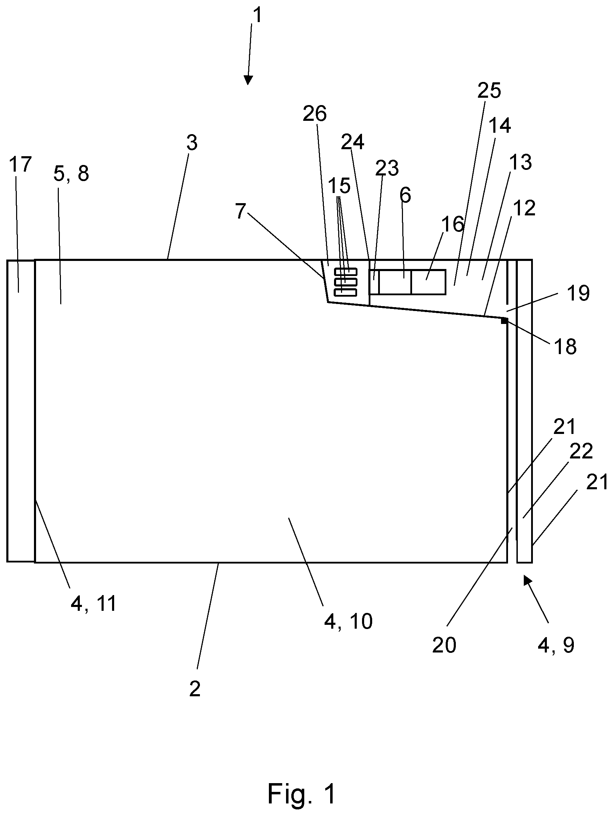

**Figur** 1 zeigt ein Fahrzeug mit einem erfindungsgemäßen Kofferaufbau 1, umfassend einen durch einen Boden 2, eine Decke 3 und vier Wände 4 gebildeten Kasten 5 und ein Klimatisierungssystem mit Verdampfer 6 und Ausströmermaske 7. Das Klimatisierungssystem ist dazu eingerichtet, die Luft in dem Innenraum 8 des Kastens 5 zu temperieren. Das Klimatisierungssystem umfasst ferner einen Verdichter und einen Kondensator, wobei der Kondensator an der Unterseite des Fahrzeugs angebracht ist. Alternativ kann der Kondensator auch auf dem Dach des Fahrzeugs angeordnet sein. Dem Kondensator sind zwei Lüfter zugeordnet.

Der Kasten 5 begrenzt einen Innenraum 8 zur Aufnahme von Behältern. Der Kasten 5 ist quaderförmig ausgebildet und umfasst eine Stirnwand 9, zwei an der Stirnwand 9 angeordnete Seitenwände 10 und eine der Stirnwand 9 gegenüberliegende Rückwand 11. Die Länge des Kastens 5 beträgt 3.400 mm. Die Breite des Kastens 5 beträgt 2.000 mm. Die Höhe des Kastens 5 beträgt 1.900 mm. Die zuvor genannten Maße beziehen sich auf die Innenmaße des Kastens 5. Der Kasten 5 ist mit dem Chassis des Fahrzeugs verbunden. Der Innenraum 8 weist ein Volumen von etwa 13,5 m³ auf.

Die Ausströmermaske 7 ist als Kondensatsammler ausgebildet und korbförmig ausgebildet. Die Ausströmermaske 7 umfasst einen Boden 12 und drei Seitenwände 13. Die Ausströmermaske 7 ist so an der Decke 3 und an der Stirnwand 10 des Kastens 5 angeordnet, dass der Boden 12 und die drei Seitenwände 13 der Ausströmermaske 7 zusammen mit der Wand 4 und der Decke 3 des Kastens 5 einen Aufnahmeraum 14 bilden. Der Boden 12 der Ausströmermaske 7 ist an einer Unterseite des Verdampfers 6 angeordnet und der Verdampfer 6 ist in dem Aufnahmeraum 14 angeordnet. Der Boden 12 und die Seitenwände 13 der Ausströmermaske 7 umgeben den Verdampfer 6. Die Seitenwände 13 der Ausströmermaske 7 sind an der Decke 3 des Kastens 5 angeordnet. In die Seitenwände 13 der Ausströmermaske 7 sind Durchlassöffnungen 15 eingebracht. Dadurch wird eine Luftzirkulation zwischen dem Aufnahmeraum 14 und dem Innenraum 8 des Kastens 5 verbessert. Die Ausströmermaske 7 ist dazu eingerichtet, Kondensationsflüssigkeit aufzunehmen. Die Ausströmermaske 7 ist derart ausgestaltet, um die in der Ausströmermaske 7 aufgenommene Kondensationsflüssigkeit wegzuführen. Dadurch kann verhindert werden, dass die in der Ausströmermaske 7 aufgenommene Kondensationsflüssigkeit wieder in die Luft oder auf sonstigem Wege außerhalb der Ausströmermaske 7 in den Innenraum 8 des Kastens 5 gelangt. Somit kann verhindert werden, dass einmal in der Ausströmermaske 7 aufgenommene Kondensationsflüssigkeit zur im Innenraum 8 des Kastens 5 gelagerten Ware oder den für die Ware verwendeten Papiertüten gelangt und diese beschädigt. Der Boden 12 der Ausströmermaske 7 grenzt in einem Winkel kleiner als 90° an die Stirnwand 9 des Kastens 5. Dabei ist der Boden 12 der Ausströmermaske 7 gegenüber der Stirnwand 9 des Kastens 5 geneigt, und zwar so, dass der Boden 12 der Ausströmermaske 7 von der Stirnwand 9 des Kastens 5 in Richtung der Decke 3 des Kastens 5 abragt. Der Boden 12 der Ausströmermaske 7 weist somit in Richtung der Stirnwand 9 des Kastens 5 ein Gefälle von weniger als 15° auf. Durch dieses Gefälle kann Kondensationsflüssigkeit, die sich in dem Aufnahmeraum 14 an dem Boden 12 der Ausströmermaske 7 ansammelt, durch die Schwerkraft entlang des Gefälles in Richtung der Stirnwand 9 des Kastens 5 fließen.

Der Verdampfer 6 weist eine Einströmseite für die umzuwälzende Luft und eine Ausströmseite für die temperierte Luft auf. Der Verdampfer 6 weist eine Einrichtung zur Luftzirkulation 16 auf, die durch den Verdampfer 6 temperierte Luft im Innenraum 8 des Kastens 5 verteilt. Durch die Einrichtung für die Luftzirkulation 16 entsteht in dem Innenraum 8 des Kastens 5 eine Zwangsströmung, welche eine besonders gute Durchmischung und Temperaturverteilung der temperierten Luft bewirkt. Des Weiteren vergrößert sich der Luftaustausch zwischen dem Aufnahmeraum 14 der Ausströmermaske 7 und dem restlichen Innenraum 8 des Kastens 5. Die Einrichtung zur Luftzirkulation 16 ist ein elektrisch angetriebener Ventilator. Die Einrichtung für die Luftzirkulation 16 umfasst eine Einströmseite und eine Ausströmseite. Die Ausströmseite der Einrichtung für die Luftzirkulation 16 weist in Richtung der Rückwand 11 des Kastens 5.

In der Rückwand 11 des Kastens 5 ist eine Tür 17 eingebracht, die eine geöffnete Position und eine geschlossene Position umfasst. Die Tür 17 bedeckt einen Ausschnitt der Rückwand 11. In der geschlossenen Position verdeckt die Tür 17 den Ausschnitt der Rückwand 11 vollständig. In der geöffneten Position kann ein Benutzer von außen nach innen oder umgekehrt durch den Ausschnitt Rückwand 11 in den Kofferaufbau 1 hinein- oder aus dem Kofferaufbau 1 heraustreten. Der Ausschnitt der Rückwand 11 weist eine lichte Weite von mindestens 800 mm auf. Die Tür 17 erstreckt sich in der Rückwand 11 vom Boden 2 bis zur Decke 3.

Die Einrichtung zur Luftzirkulation 16 umfasst einen Türkontaktschalter, der derart eingerichtet ist, dass bei geöffneter Position der Tür 17 die Leistung der Einrichtung zur Luftzirkulation 16 reduziert ist. Wird die Luftgeschwindigkeit reduziert, dann sinkt zwar auch die Temperierleistung etwas ab, aber es kann durch die verringerte Strömungsgeschwindigkeit verhindert werden, dass im Luftstrom Wasser mitgerissen wird. Zudem strömt bei geöffneter Tür 17 weniger warme Umgebungsluft in den Innenraum 8 des Kastens 5.

Zwischen der Ausströmermaske 7 und der Stirnwand 9 des Kastens 5 ist eine Dichtung 18 angeordnet. Die Dichtung 18 verhindert, dass Kondensationsflüssigkeit von dem Boden 12 der Ausströmermaske 7 in den Innenraum 8 tropft.

Das Klimatisierungssystem ist mit einem Ausblastemperaturfühler ausgerüstet, der die Temperatur der aus dem Verdampfer 6 ausströmenden Luft misst. Dadurch kann der Benutzer die Ausblastemperatur mittels einer Steuerung begrenzen.

Das Klimatisierungssystem ist mit einem Außentemperaturfühler ausgerüstet, der die Umgebungstemperatur außerhalb des Kastens 5 misst. Der Außentemperaturfühler ist an einer Außenseite des Kastens 5 angeordnet. In Abhängigkeit der Außentemperatur kann die Soll-Temperatur im Innenraum 8 des Kastens 5 abweichend zur eigentlich gewünschten Temperatur eingestellt werden. Wenn beispielsweise eine Innenraumtemperatur von 25 °C gewünscht ist, kann bei einer hohen Außentemperatur eine niedrigere Innenraumtemperatur als Soll-Temperatur vorgegeben werden, beispielsweise 23 °C, und bei einer niedrigen Außentemperatur kann eine höhere Innenraumtemperatur als Soll-Temperatur vorgegeben werden, beispielsweise 27 °C. Dadurch kann ein besserer Temperaturausgleich beim Türöffnen erzielt werden, weil die Wärme, die in den Waren, welche im Innenraum 8 des Kastens 5 gelagert sind, gespeichert ist, den Temperaturanstieg bzw. -abfall kompensiert.

In die Stirnwand 9 des Kastens 5 ist eine Öffnung 19 eingebracht, wobei die Öffnung 19 in fluidischer Verbindung mit einem Abflusskanal 20 steht. Die Öffnung 19 ist derart in der Stirnwand 9 des Kastens 5 angeordnet, dass die in der Ausströmermaske 7 aufgenommene Kondensationsflüssigkeit durch die Öffnung 19 in den Abflusskanal 20 abfließen kann. Der Abflusskanal 20 endet außerhalb des Kastens 5 im Bereich des Bodens 2 des Kastens 5. Dadurch wird sichergestellt, dass in der Ausströmermaske 7 aufgenommene Kondensationsflüssigkeit, die von der Ausströmermaske 7 weggeführt wurde, nicht wieder zur Ausströmermaske 7 oder in den Innenraum 8 zurück gelangt.

Der Boden 2, die Decke 3 und die Wände 4 des Kastens 5 sind als Sandwichkonstruktion aufgebaut (aus Gründen der Übersicht ist die Sandwichkonstruktion hier nur für die Rückwand dargestellt). Der Boden 2, die Decke 3 und die Wände 4 des Kastens 5 umfassen jeweils zwei Decklagen 21 und eine zwischen den Decklagen 21 angeordnete Dämmlage 22. Die Decklagen 21 ist aus einem metallischen Werkstoff ausgebildet, um die Dämmlage 22 vor äußerlichen Einwirkungen und Beschädigungen zu schützen. Die Dämmlage 22 ist aus Schaumstoff oder einem ähnlichen Dämmmaterial ausgebildet, um sowohl eine Wärmeisolation als auch eine ausreichende Festigkeit des Sandwichverbundes zu gewährleisten. Der Abflusskanal 20 ist zwischen den zwei Decklagen 21 angeordnet.

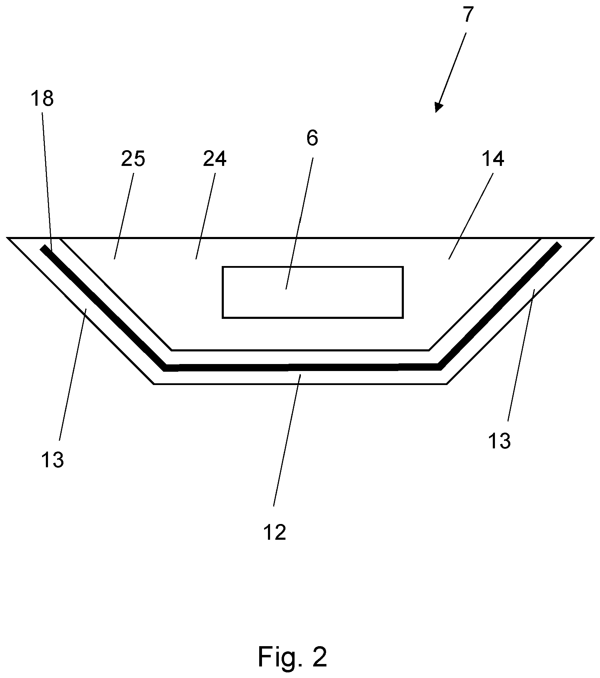

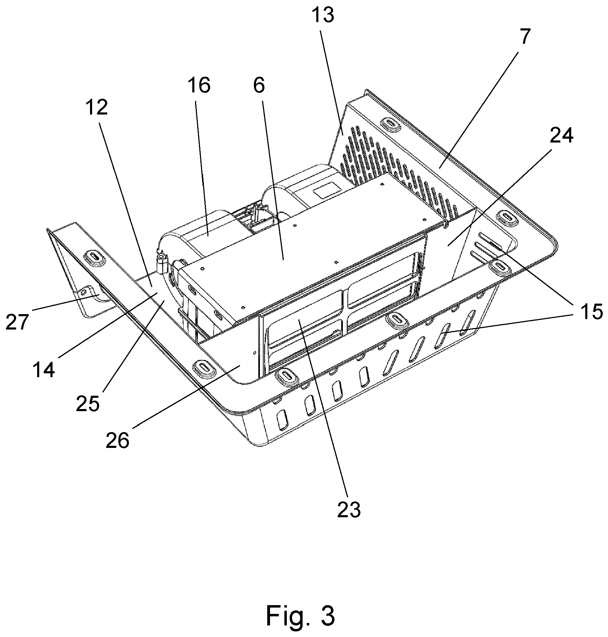

In den **Figuren 2** **und** **3** ist jeweils die Ausströmermaske 7 des Kofferaufbaus 1 aus **Figur 1** im Detail dargestellt. Das Klimatisierungssystem umfasst einen Filter 23, der auf einer Ausströmseite des Verdampfers 6 angeordnet ist. Der Filter 23 fängt mit dem Luftstrom mitgerissenes Wasser auf, das an dem Filter 23 kondensiert und von dort abgeführt wird. Der Filter 23 ist aus Vlies hergestellt und als Vliesmatte ausgestaltet. Dadurch kann die Luftfeuchtigkeit im Innenraum 8 gesenkt werden.

Die Ausströmermaske 7 umfasst eine Sperrmaske 24, um einen thermischen Kurzschluss der Luftströmung innerhalb des Aufnahmeraums 14 der Ausströmermaske 7 zu verhindern. Dabei ist die Sperrmaske 24 derart angeordnet, dass ein unmittelbarer Rückfluss der ausströmenden Luft von der Ausströmseite des Verdampfers 7 zur Einströmseite der Einrichtung zur Luftzirkulation 16 innerhalb des Aufnahmeraums 14 der Ausströmermaske 7 verhindert wird. Die Sperrmaske 24 ist in der Ausströmermaske 7 angeordnet. Die Sperrmaske 24 erstreckt sich zwischen zwei gegenüberliegenden Seitenwänden 13 der Ausströmermaske 7 und teilt den Aufnahmeraum 14 der Ausströmermaske 7 in einen ersten Bereich 25 und einen zweiten Bereich 26. Die Sperrmaske 24 grenzt an zwei gegenüberliegende Seitenwände 13 der Ausströmermaske 7 und den Boden 12 der Ausströmermaske 7. Die Sperrmaske 24 ist dabei so angeordnet, dass die Einströmseite der Einrichtung zur Luftzirkulation 16 in dem ersten Bereich 24 angeordnet ist und die Ausströmseite des Verdampfers 6 in dem zweiten Bereich 25 angeordnet ist. Die Sperrmaske 24 umfasst einen Ausschnitt, wobei die ausströmende Luft des Verdampfers 6 durch den Ausschnitt strömt. Die Ausströmermaske 7 umfasst an einer der Stirnwand zugewandten Seite eine Vertiefung 27 (in **Figur 3** dargestellt), in der die Dichtung 18 angeordnet ist.

## Patentansprüche

1. Kofferaufbau (1) für ein Fahrzeug, umfassend einen durch einen Boden (2), eine Decke (3) und vier Wände (4) gebildeten Kasten (5) und ein Klimatisierungssystem mit Verdampfer (6) und Ausströmermaske (7), wobei der Kasten (5) einen Innenraum (8) zur Aufnahme von Behältern begrenzt, wobei das Klimatisierungssystem dazu eingerichtet ist, die Luft in dem Innenraum (8) des Kastens (5) zu temperieren, wobei die Ausströmermaske (7) einen Aufnahmeraum (14) begrenzt und der Verdampfer (6) in dem Aufnahmeraum (14) angeordnet ist, **dadurch gekennzeichnet, dass** die Ausströmermaske (7) eingerichtet ist, Kondensationsflüssigkeit aufzunehmen.

2. Kofferaufbau (1) nach Anspruch 1, **dadurch gekennzeichnet, dass** die Ausströmermaske (7) ausgestaltet ist, um die in der Ausströmermaske (7) aufgenommene Kondensationsflüssigkeit wegzuführen.

3. Kofferaufbau (1) nach Anspruch 2, **dadurch gekennzeichnet, dass** in die Wand (4) des Kastens (5) eine Öffnung (19) eingebracht ist, wobei die Öffnung (19) in fluidischer Verbindung mit einem Abflusskanal (20) steht, wobei die Öffnung (19) derart in der Wand (4) des Kastens (5) angeordnet ist, dass die in der Ausströmermaske (7) aufgenommene Kondensationsflüssigkeit durch die Öffnung (19) in den Abflusskanal (20) abfließt.

4. Kofferaufbau (1) nach einem der Ansprüche 1 bis 3, **dadurch gekennzeichnet, dass** die Ausströmermaske (7) einen Boden (12) und drei Seitenwände (10) umfasst, wobei die Ausströmermaske (7) so an der Decke (3) und an einer Wand (4) des Kastens (5) angeordnet ist, dass der Boden (12) und die drei Seitenwände (10) der Ausströmermaske (7) zusammen mit der Wand (4) und der Decke (3) des Kastens (5) den Aufnahmeraum (14) für den Verdampfer (7) bilden.

5. Kofferaufbau (1) nach Anspruch 4, **dadurch gekennzeichnet, dass** der Boden (12) der Ausströmermaske (7) in einem Winkel kleiner als 90° an die Wand (4) des Kastens (5) angrenzt.

6. Kofferaufbau (1) nach einem der Ansprüche 1 bis 5, **dadurch gekennzeichnet, dass** der Verdampfer (6) eine Einrichtung zur Luftzirkulation (16) aufweist, die durch den Verdampfer (6) temperierte Luft im Innenraum (8) des Kastens (5) verteilt.

7. Kofferaufbau (1) nach Anspruch 6, **dadurch gekennzeichnet, dass** die Einrichtung zur Luftzirkulation (16) als Ventilator ausgebildet ist.

8. Kofferaufbau (1) nach einem der Ansprüche 6 oder 7, **dadurch gekennzeichnet, dass** in eine der Wände (4) eine Tür (17) eingebracht ist, die eine geöffnete Position und eine geschlossene Position umfasst, wobei die Einrichtung zur Luftzirkulation (16) einen Türkontaktschalter umfasst, der derart eingerichtet ist, dass bei geöffneter Position der Tür (17) die Leistung der Einrichtung zur Luftzirkulation (16) reduziert ist.

9. Kofferaufbau (1) nach einem der Ansprüche 1 bis 8, **dadurch gekennzeichnet, dass** die Einrichtung zur Luftzirkulation (16) einen Filter (23) umfasst, der auf einer Ausströmseite der Einrichtung zur Luftzirkulation (16) angeordnet ist.

10. Kofferaufbau (1) nach einem der Ansprüche 1 bis 9, **dadurch gekennzeichnet, dass** die Ausströmermaske (7) eine Sperrmaske (24) umfasst, um einen thermischen Kurzschluss der Luftströmung innerhalb des Aufnahmeraums (14) der Ausströmermaske (7) zu verhindern.

11. Kofferaufbau (1) nach einem der Ansprüche 1 bis 10, **dadurch gekennzeichnet, dass** der Boden (2), die Decke (3) und die Wände (4) des Kastens (5) als Sandwichkonstruktion aufgebaut sind, wobei der Boden (2), die Decke (3) und die Wände (4) des Kastens (5) jeweils zwei Decklagen (21) und eine zwischen den Decklagen (21) angeordnete Dämmlage (22) umfassen.

12. Kofferaufbau (1) nach einem der Ansprüche 1 bis 11, **dadurch gekennzeichnet, dass** zwischen der Ausströmermaske (7) und der Wand (4) des Kastens (5) eine Dichtung (18) angeordnet ist.

13. Kofferaufbau (1) nach einem der Ansprüche 1 bis 12, **dadurch gekennzeichnet, dass** das Klimatisierungssystem mit einem Ausblastemperaturfühler ausgerüstet ist, der die Temperatur der aus dem Verdampfer (6) ausströmenden Luft misst.

14. Kofferaufbau (1) nach einem der Ansprüche 1 bis 13, **dadurch gekennzeichnet, dass** das Klimatisierungssystem mit einem Außentemperaturfühler ausgerüstet ist, der die Umgebungstemperatur außerhalb des Kastens (5) misst.

15. Fahrzeug zur Auslieferung von Lebensmitteln mit einem Kofferaufbau (1) nach einem der Ansprüche 1 bis 14.
